# FASCICULE DE BREVET EUROPEEN

(11) **EP 2 084 446 B1**
(45) Date de publication et mention de la délivrance du brevet: **10.04.2013**
(21) Numéro de dépôt: 07866452.1
(22) Date de dépôt: 26.10.2007
(51) Int. Cl.: F16L 37/08, F16L 21/08, F16L 37/084

(54) **JONCTION TUBULAIRE**
ROHRVERBINDUNG
TUBULAR CONNECTION

(30) Priorité: 31.10.2006 FR 0654661
(43) Date de publication de la demande: 05.08.2009
(73) Titulaire: Saint-Gobain PAM, 54000 Nancy (FR)
(72) Inventeur: VITEL, Jean-Pierre, 54470 Thiaucourt-regnieville (FR); RENARD, Philippe, 54710 Fleville (FR); GROJEAN, Daniel, 54840 Gondreville (FR)
(74) Mandataire: Jacobson, Claude
(86) Numéro de dépôt international: PCT/FR2007/001779
(87) Numéro de publication internationale: WO 2008/053100

(56) Documents cités:
- EP-A- 0 526 373
- EP-A1- 0 433 202
- EP-A1- 0 552 123
- WO-A-95/08072
- AU-B2- 694 988
- FR-A1- 2 875 888

## Description

La présente invention concerne une jonction tubulaire, du type indiqué dans le préambule de la revendication 1.

Une telle jonction est connue de EP526373.

Elle s'applique notamment aux canalisations transportant de l'eau potable ou des eaux usées pour l'assainissement.

On connaît dans l'état de la technique de telles jonctions tubulaires. Lorsque la jonction tubulaire est à l'état posé et lors de l'exploitation de la canalisation, un fluide sous pression circule dans les éléments de canalisation. Sous l'action du fluide sous pression le bout uni et le bout à emboîtement ont tendance à se séparer l'un de l'autre. De plus, la garniture d'étanchéité risque d'être extrudée, voire expulsée entre le bout à emboîtement et le bout uni.

Les jonctions tubulaires connues comportent des éléments de verrouillage qui sont adaptés pour verrouiller le bout uni par rapport au bout à emboîtement et empêcher ainsi la séparation axiale entre les éléments de canalisation assemblés.

On connaît d'une part des éléments de verrouillage qui coopèrent exclusivement à coulissement avec la gorge intérieure du bout à emboîtement. Toutefois, dans le cas d'un jeu faible entre le bout à emboîtement et le bout uni, ces éléments de verrouillage nécessitent une force importante d'emboîtage étant donné que le déplacement axial des éléments de verrouillage lors de l'insertion du bout uni nécessite la compression d'un volume important d'élastomère. De plus, ces jonctions tubulaires ne permettent pas un décalage angulaire important entre le bout uni et le bout à emboîtement.

En outre, on connaît des éléments de verrouillage noyés dans l'élastomère et fonctionnant exclusivement par un arc-boutement entre le bout uni et le bout à emboîtement au moyen d'un basculement de l'élément de verrouillage. Ces éléments de verrouillage nécessitent alors des forces d'emboîtage importantes dans le cas d'un jeu faible entre le bout à emboîtement et le bout uni. De plus, il existe le risque, lorsque le jeu entre les éléments de canalisation est important et lorsque la pression interne est élevée, que l'élément de verrouillage ne résiste pas au recul du bout uni et se retourne complètement, rendant alors le verrouillage inopérant.

L'invention a pour but de pallier ces inconvénients et de proposer une jonction tubulaire qui permet à la fois de réduire les forces d'emboîtage du bout uni dans le bout à emboîtement et un verrouillage efficace dans une large gamme de jeux.

A cet effet, l'invention a pour objet une jonction tubulaire du type indiqué, caractérisé par les caractéristiques de la partie caractérisante de la revendication 1.

Selon des modes particuliers de réalisation, la jonction tubulaire comporte l'une ou plusieurs des caractéristiques suivantes :
- lorsque le jeu est dans la première gamme de jeux, la face d'application est adaptée pour s'appliquer à plat et pour glisser sur la paroi de gorge lors du recul du bout uni par rapport au bout à emboîtement dans le sens tendant à sortir le bout uni du bout à emboîtement, l'élément de verrouillage se déplaçant axialement vers l'extrémité libre et radialement vers l'intérieur par glissement de la face d'application sur la paroi de gorge ;
- lorsque la face d'application de l'élément de verrouillage s'applique contre la paroi de gorge, la dent d'accrochage principale s'étend sensiblement radialement vers l'intérieur par rapport à l'axe central ;
- l'élément de verrouillage comporte une face intérieure qui, lorsque le jeu radial est un jeu minimal, s'étend sensiblement parallèlement à l'axe central, le jeu minimal constituant une limite inférieure de la deuxième gamme de jeux ;
- l'élément de verrouillage comporte une butée adaptée pour limiter la pénétration de la dent d'accrochage principale dans le bout uni ;
- la butée s'étend axialement à l'opposé de l'extrémité libre du bout à emboîtement ;
- l'élément de verrouillage comporte une dent d'accrochage auxiliaire, décalée axialement de la dent d'accrochage principale dans le sens dirigé vers l'extrémité libre du bout à emboîtement, et la dent d'accrochage auxiliaire est adaptée pour accrocher la surface extérieure du bout uni lorsque le jeu est proche du jeu minimal ;
- la dent d'accrochage auxiliaire comporte une surface d'accrochage auxiliaire qui est dirigée à l'opposé de l'extrémité libre du bout à emboîtement et qui forme un angle avec la face intérieure de l'élément de verrouillage ;
- la dent d'accrochage principale a une forme non rectiligne, notamment en arc de cercle ;
- la dent d'accrochage principale a une forme rectiligne ;
- la jonction tubulaire peut comporter au moins un élément anti-extrusion qui est adapté pour empêcher l'extrusion de la garniture d'étanchéité entre le bout uni et le bout à emboîtement ;
- l'élément anti-extrusion est en matière plastique ayant une résistance à la déformation supérieure à celle de la matière de la garniture d'étanchéité, notamment en polyamide, en polyéthylène ou en polypropylène ;
- l'élément anti-extrusion est fixé à la garniture d'étanchéité ;
- l'élément anti-extrusion est disposé circonférentiellement entre deux éléments de verrouillage ;
- l'élément anti-extrusion porte l'un des éléments de verrouillage ;
- l'élément de verrouillage délimite un écart avec l'élément anti-extrusion lui servant de support, cet écart conférant à l'élément de verrouillage une mobilité par rapport à la garniture d'étanchéité ;
- l'élément de verrouillage est fabriqué en une matière ayant une dureté supérieure à celle de la matière du bout uni, notamment en métal ;
- la jonction tubulaire peut comporter au moins une entretoise circonférentielle en matière élastique, notamment venue de matière avec la garniture d'étanchéité, l'entretoise étant disposée entre un élément de verrouillage et un autre élément de verrouillage adjacent ou un élément anti-extrusion adjacent ;
- l'élément de verrouillage est fixé à la garniture d'étanchéité ou à un élément anti-extrusion au moyen d'au moins un organe de fixation, notamment une vis ou un téton d'ancrage ;
- l'élément de verrouillage a une section sensiblement triangulaire ;
- l'élément de verrouillage forme une face de liaison adjacente à la garniture d'étanchéité ; et
- le premier angle est compris entre 10° et 55°.

L'invention sera mieux comprise à la lecture de la description qui va suivre, donnée uniquement à titre d'exemple et faite en se référant aux dessins annexés, sur lesquels :
- la Figure 1 est une vue en perspective d'une jonction tubulaire selon l'invention à l'état non assemblé ;
- la Figure 2 est une vue en coupe longitudinale d'une partie de la jonction tubulaire de la Figure 1 avant insertion du bout uni, la garniture d'étanchéité étant disposée dans le bout à emboîtement et le bout uni étant omis;
- les Figures 3 à 5 sont des vues correspondantes à celle de la Figure 2, la jonction tubulaire étant à l'état monté dans le cas de différents jeux formés entre le bout uni et le bout à emboîtement ;
- la Figure 6 est une vue analogue à celle de la Figure 5, le bout uni étant angulairement décalé du bout à emboîtement ;
- la Figure 7 est une vue analogue à celle de la Figure 3 montrant un deuxième mode de réalisation de la jonction tubulaire selon l'invention et comportant une dent d'accrochage auxiliaire ;
- la Figure 8 est une vue en perspective d'une garniture d'étanchéité munie d'éléments de verrouillage et d'éléments anti-extrusion d'une jonction tubulaire selon un troisième mode de réalisation de l'invention ;
- la Figure 9 est une vue à l'état non assemblé d'une partie de la garniture d'étanchéité de la Figure 8 ;
- la Figure 10 est une vue en perspective d'une garniture d'étanchéité d'une jonction tubulaire selon un quatrième mode de réalisation de l'invention ;
- la Figure 11 est une vue en perspective d'une partie de la garniture d'étanchéité de la Figure 10, à l'état non assemblé ;
- la Figure 12 est une vue en perspective à l'état non assemblé d'une partie d'une garniture d'étanchéité d'une jonction tubulaire selon un cinquième mode réalisation de l'invention ;
- la Figure 13 est une vue en perspective à l'état non assemblé d'une partie d'une garniture d'étanchéité d'une jonction tubulaire selon un sixième mode de réalisation de l'invention ;
- la Figure 14 est une vue en coupe transversale de la garniture d'étanchéité de la Figure 13 à l'état assemblé ;
- la Figure 15 est une vue en perspective d'une garniture d'étanchéité d'une jonction tubulaire selon un septième mode de réalisation de l'invention ; et
- la Figure 16 est une vue en perspective d'une partie de la garniture d'étanchéité de la Figure 15, à l'état non assemblé.

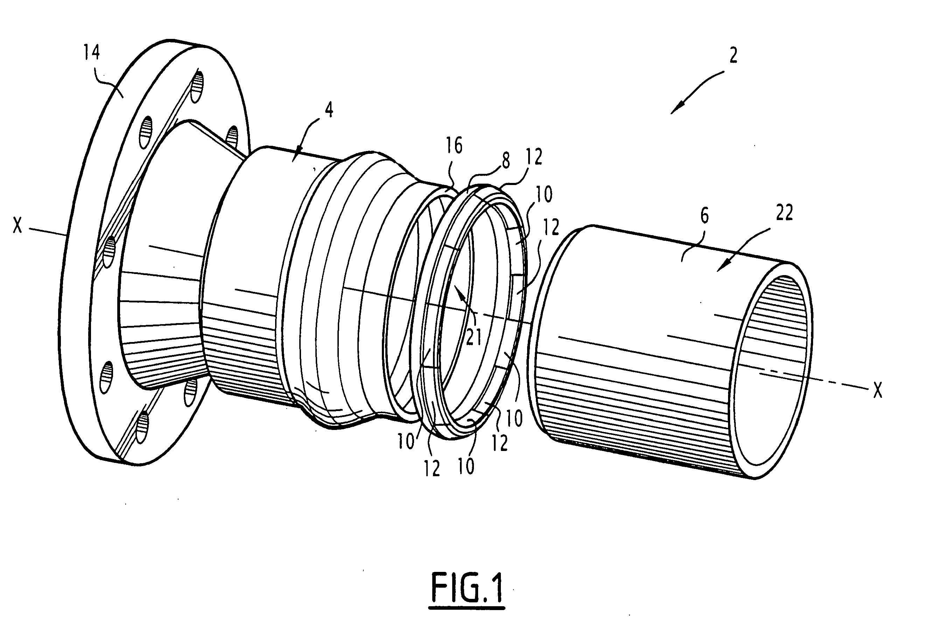

La Figure 1 montre une jonction tubulaire selon l'invention, désignée par la référence générale 2.

La jonction tubulaire 2 comporte un premier élément de canalisation muni d'un bout à emboîtement 4, un second élément de canalisation muni d'un bout uni 6, une garniture d'étanchéité 8, des éléments anti-extrusion 10 et des éléments de verrouillage 12.

La jonction tubulaire 2 définit un axe central X-X. Dans ce qui suit les expressions « axialement », « radialement » et « circonférentiellement » seront utilisées par rapport à cet axe central X-X.

Le bout à emboîtement 4 et le bout uni 6 sont fabriqués par exemple en fonte. De plus, ces éléments de canalisation peuvent être revêtus d'une couche protectrice non représentée.

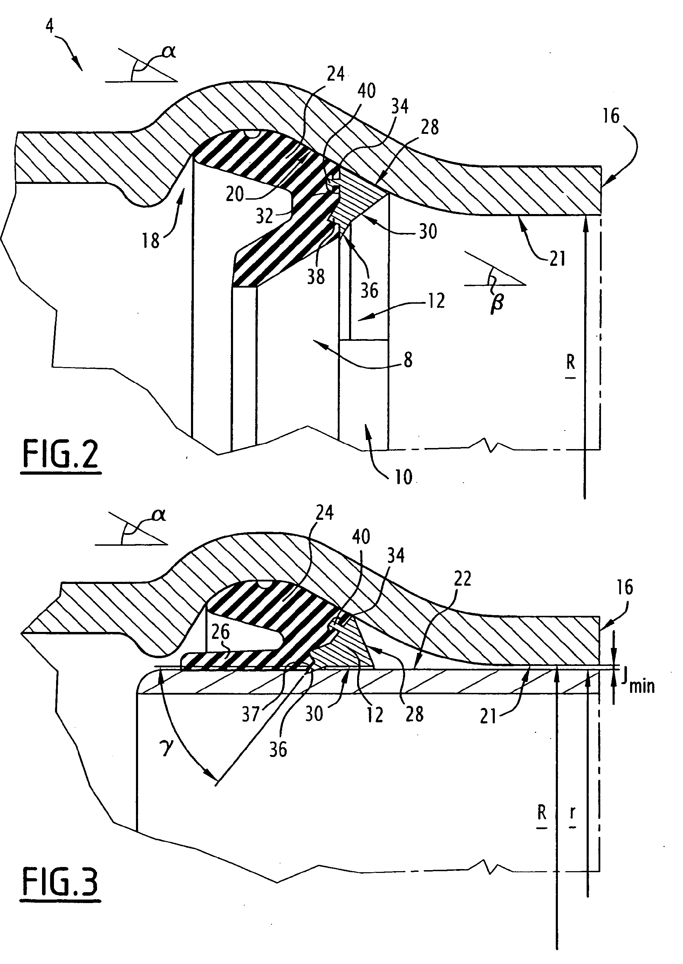

Le bout à emboîtement 4 comporte une bride de fixation 14 pour l'assemblage avec un élément de canalisation (non représenté) muni d'une bride correspondante, ainsi qu'une extrémité libre 16, tournée vers le bout uni 6 à l'état non assemblé. Le bout à emboîtement 4 comporte en outre une gorge annulaire intérieure 18 (voir Figure 2). En l'occurrence, la gorge intérieure 18 comporte une section transversale sensiblement en arc de cercle, mais elle peut avoir d'autres formes, par exemple une section rectangulaire. Elle forme une paroi de gorge 20 inclinée par rapport à l'axe central X-X. La paroi 20 a une forme tronconique et se rétrécit vers l'extrémité libre 16 du bout à emboîtement. Elle forme un angle α avec l'axe central X-X, compris entre 10° et 55° environ.

Comme ceci est visible sur la Figure 3, à l'état assemblé de la jonction tubulaire 2, la garniture d'étanchéité 8, munie des éléments anti-extrusion 10 et des éléments de verrouillage 12, est insérée dans la gorge intérieure 18 du bout à emboîtement. La garniture d'étanchéité 8 est disposée axialement du côté tourné vers la bride de fixation 14, tandis que les éléments de verrouillage 12 et les éléments anti-extrusion 10, fixés à la garniture 8, sont disposés axialement du côté de l'extrémité libre 16.

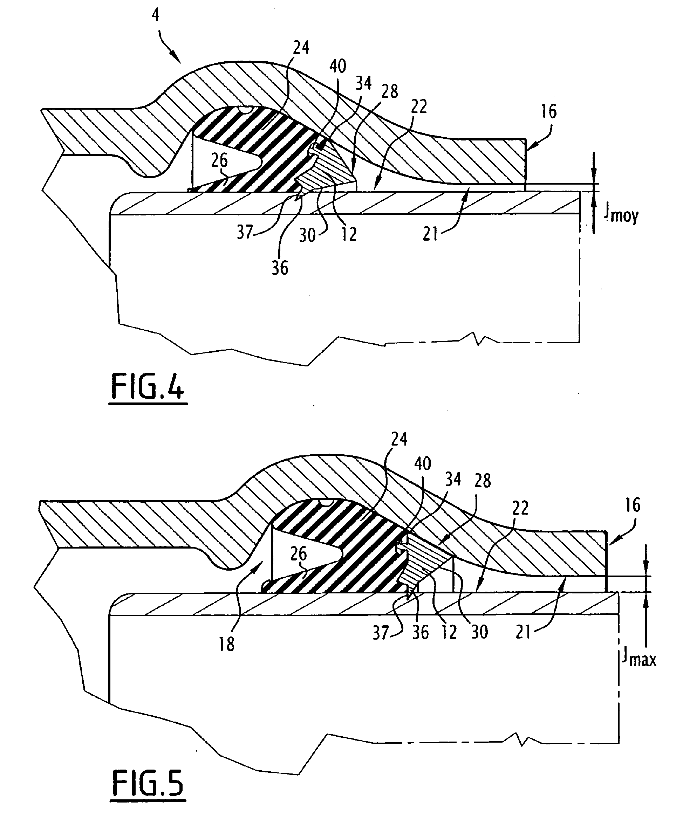

Le bout à emboîtement 4 comporte une surface radialement intérieure 21 qui s'étend entre l'extrémité libre 16 et la paroi de gorge 20. Cette surface 21 est sensiblement cylindrique et est définie par un rayon R autour de l'axe X-X. Le bout uni 6 comporte une surface radialement extérieure 22 cylindrique et définie par un rayon r autour de l'axe X-X. Lors de la fabrication du bout à emboîtement 4 et du bout uni 6, les rayons R et r sont compris dans une gamme de tolérances de fabrication. En conséquence, la surface intérieure 21 et la surface extérieure 22 délimitent entre elles un jeu J = R-r. En fonction des tolérances de fabrication, ce jeu J est situé entre un jeu maximal Jₘₐₓ(voir Figure 5), qui est obtenu lorsque le rayon R est maximal et le rayon r est minimal, ainsi qu'un jeu minimal Jₘᵢₙ (voir Figure 3) qui est obtenu lorsque le rayon R est minimal et le rayon r est maximal.

Le plus couramment cependant, le jeu entre le bout uni et le bout à emboîtement est un jeu moyen J_{moy}(voir Figure 4) qui est situé entre le jeu maximal Jₘₐₓ et le jeu minimal Jₘᵢₙ.

La garniture d'étanchéité 8 est par exemple fabriquée en caoutchouc. Elle comporte un corps de base 24 et une lèvre d'étanchéité 26.

Chaque élément de verrouillage 12 est un élément fabriqué en une matière ayant une dureté supérieure à celle de la surface du bout uni 6, telle que du metal. L'élément de verrouillage 12 a une section génératrice montrée sur la

Figure 1 qui s'étend, hormis les tétons d'accrochage 40 (voir ci-après) sur la totalité d'un arc de cercle autour de l'axe central X-X. L'élément de verrouillage 12 couvre une plage angulaire autour de l'axe central X-X comprise de préférence entre 10° et 50°. Dans le mode de réalisation représenté, cinq éléments de verrouillage 12 sont répartis régulièrement autour de l'axe X-X, dont chacun couvre une plage angulaire de 36° environ (voir Figure 1).

En se référant à la Figure 2 montrant la position de la garniture à l'état non sollicité, la section transversale de l'élément de verrouillage 12 est sensiblement triangulaire. L'élément de verrouillage 12 forme ainsi une face d'application 28 tronconique ayant une composante dirigée radialement vers l'extérieur, une face radialement intérieure 30 et une face de liaison 32 qui est adjacente à la garniture d'étanchéité 8 et qui assure la liaison de l'élément de verrouillage 12 avec la garniture d'étanchéité 8. Dans la configuration montrée sur la Figure 2, la face d'application 28 est inclinée d'un angle β par rapport à l'axe X-X, angle qui est sensiblement identique à l'angle d'inclinaison α de la paroi de gorge 20 par rapport à l'axe central X-X. La face d'application 28 s'applique donc à plat sur la paroi 20. La face de liaison 32 s'étend à l'état non sollicité de la garniture 8 radialement par rapport à l'axe central X-X. Par ailleurs, la face d'application 28 et la face de liaison 32 forment à leur jonction, en section radiale, un point de basculement 34 permettant de faire basculer l'élément de verrouillage 12 autour de la paroi de gorge 20.

L'élément de verrouillage 12 comporte au niveau de la jonction entre la face intérieure 30 et la face de liaison 32 une dent d'accrochage principale 36 adaptée pour venir mordre dans la surface extérieure 22 du bout uni. Cette dent comporte une surface d'accrochage principale 37 dirigée à l'opposé de l'extrémité libre 16 et formant un angle γ avec la face intérieure 30 de l'élément de verrouillage.

Enfin, l'élément de verrouillage 12 est muni d'une butée 38 adaptée pour limiter la pénétration de la dent d'accrochage principale 36 dans le bout uni 6. La butée 38 s'étend axialement à l'opposé de l'extrémité libre du bout à emboîtement et fait saillie de la face de liaison 32.

L'élément de verrouillage 12 est fixé à la garniture 8. A cet effet, l'élément de verrouillage 12 porte un ou plusieurs tétons d'ancrage 40 qui font saillie sur la face de liaison 32. Chaque téton 40 est fixé à la garniture d'étanchéité 8 par surmoulage.

Afin de garantir une mobilité relative de l'élément de verrouillage 12 celui-ci est fixé uniquement par le téton d'ancrage 40 à la garniture d'étanchéité 8. La zone de contact entre la surface de liaison 32 et de la garniture d'étanchéité étant dépourvue de tout autre liant.

Comme ceci est visible sur la Figure 1, les éléments anti-extrusion 10 ont une section transversale strictement triangulaire qui correspond sensiblement à celle de l'élément de verrouillage 12. Toutefois, la section de l'élément anti-extrusion 10 est démunie de la dent d'accrochage principale 36 et de la butée 38. Les éléments anti-extrusion 10 ont une forme d'arc de cercle autour de l'axe central X-X et s'étendent circonférentiellement entre deux éléments de verrouillage 12 adjacents. Ainsi, les éléments anti-extrusion 10 empêchent, en combinaison avec les éléments de verrouillage 12, que l'élastomère de la garniture d'étanchéité 8 soit extrudé vers l'extérieur à travers l'espace annulaire délimité par la surface extérieure 22 du bout uni 6 et la surface intérieure 21 du bout à emboîtement 4 lors de la mise en pression des éléments de canalisation.

Les éléments anti-extrusion 10 sont de préférence réalisés en une matière plastique, telle du polyamide, du polyéthylène ou du polypropylène.

Les éléments anti-extrusion 10 sont fixés à la garniture d'étanchéité 8 par tout moyen approprié. Ils peuvent notamment être fixés par collage, surmoulage, encliquetage, vissage ou rivetage.

Le montage de la jonction tubulaire selon l'invention s'effectue de la manière suivante.

Tout d'abord, les éléments anti-extrusion 10 et les éléments de verrouillage 12 sont fixés sur la garniture d'étanchéité 8. Ainsi, la garniture d'étanchéité 8, les éléments de verrouillage 12 et les éléments anti-extrusion 10 peuvent être manipulés d'un seul bloc. Ensuite, la garniture d'étanchéité 8, équipée des éléments de verrouillage 12 et des éléments anti-extrusion 10 est disposée à la main dans la gorge intérieure 18. La jonction prend alors la configuration montrée sur la Figure 2.

Lors de l'insertion du bout uni 6 dans le bout à emboîtement 4, l'élément de verrouillage 12 bascule dans le sens horaire sur la Figure 2 et la lèvre d'étanchéité 26 est comprimée radialement vers l'extérieur, aboutissant ainsi, après emboîtage, à une configuration dans laquelle la face intérieure 30 est sensiblement parallèle à la surface extérieure 22 du bout uni, avec la dent d'accrochage principale 36 en appui sur la surface extérieure 22 mais sans mordre dans celle-ci. Ceci est particulièrement avantageux dans le cas d'un bout uni 6 muni d'un revêtement de protection extérieur, car le fait que l'élément de verrouillage 12 présente une mobilité relative et qu'il ne soit pas noyé dans l'élastomère limite la contre-poussée de l'élastomère comprimé sur l'élément de verrouillage 12 lors de l'emboîtage du bout uni et réduit alors le risque d'accrochage de la dent principale 36 dans la surface extérieure 22 du bout uni, empêchant ainsi de détériorer le revêtement extérieur.

Le fonctionnement des éléments de verrouillage 12, lors de la mise en pression du joint, diffère en fonction du jeu radial J subsistant entre la surface intérieure 21 et la surface extérieure 22.

Dans le cas où le jeu J est situé dans une première gamme de jeux dans laquelle les jeux sont élevés et peuvent atteindre le jeu Jₘₐₓ de la Figure 5, le fonctionnement est le suivant.

Lors du recul du bout uni 6 sous l'effet d'une pression intérieure élevée, l'élément de verrouillage 12 pivote d'abord dans le sens anti-horaire autour de la dent d'accrochage principale 36 qui est en appui sur la surface extérieure 22 du bout uni 6 et qui forme alors un point de basculement, et ce jusqu'à ce que sa face d'application 28 vienne en appui contre la paroi de gorge 20. L'élément de verrouillage 12 se déplace alors axialement vers l'extrémité libre 16 du bout à emboîtement 4 et radialement vers l'intérieur par glissement de la face d'application 28 sur la paroi de gorge 20, provoquant ainsi la pénétration progressive de la dent d'accrochage 36 de l'élément de verrouillage 12 dans la surface extérieure 22 du bout uni 6 et ce jusqu'à obtenir un verrouillage par effet de coin. On aboutit ainsi à une configuration de verrouillage telle que par exemple celle représentée sur la Figure 5 correspondant au cas du jeu J_{max.}.

Avantageusement, la butée 38 en saillie axiale vers l'intérieur du bout à emboîtement 4 limite la pénétration de la dent d'accrochage 36 dans le bout uni 6 afin d'empêcher toute pénétration excessive susceptible de détériorer le bout uni.

Dans le cas où le jeu J est situé dans une deuxième gamme de jeux moindres correspondant à des jeux inférieurs aux jeux de la première gamme de jeux, et englobant notamment le jeu Jₘᵢₙ (voir Figure 3) et le jeu J_{moy} (voir Figure 4), le fonctionnement est le suivant.

Lors du recul du bout uni 6 sous l'effet de la pression intérieure, l'élément de verrouillage 12 pivote tout d'abord dans le sens anti-horaire autour de la dent d'accrochage principale 36 qui est en appui sur la surface extérieure 22 du bout uni 6 et qui forme alors un point de basculement, et ce jusqu'à ce que le point de basculement 34 vienne en appui contre la paroi de gorge 20 du bout à emboîtement 4. A ce moment là, l'élément de verrouillage 12 pivote dans le sens anti-horaire autour du point de basculement 34, provoquant alors la pénétration progressive de la dent d'accrochage principale 36 dans la surface extérieure 22 du bout uni 6 et ce jusqu'à ce que l'élément de verrouillage 12 s'arc-boute entre le bout uni 6 et le bout à emboîtement 4 par l'intermédiaire respectivement de la dent d'accrochage 36 et du point de basculement 34, obtenant ainsi un verrouillage par arc-boutement.

Dans la configuration de verrouillage à jeu Jₘᵢₙ représentée sur la Figure 3, la face intérieure 30 de l'élément de verrouillage 12 est sensiblement parallèle à la surface extérieure 22 du bout uni, tandis que dans la configuration de verrouillage à jeu J_{moy} de la Figure 4, la face intérieure 30 de l'élément de verrouillage forme un angle avec la surface extérieure 22.

Dans l'exemple de réalisation décrit, l'angle entre les faces 32 et 28 formant le point de basculement 34 est un angle aigu qui favorise l'ancrage du point de basculement 34 dans la gorge 18 du bout à emboîtement 4 en vue de former un centre de rotation stable.

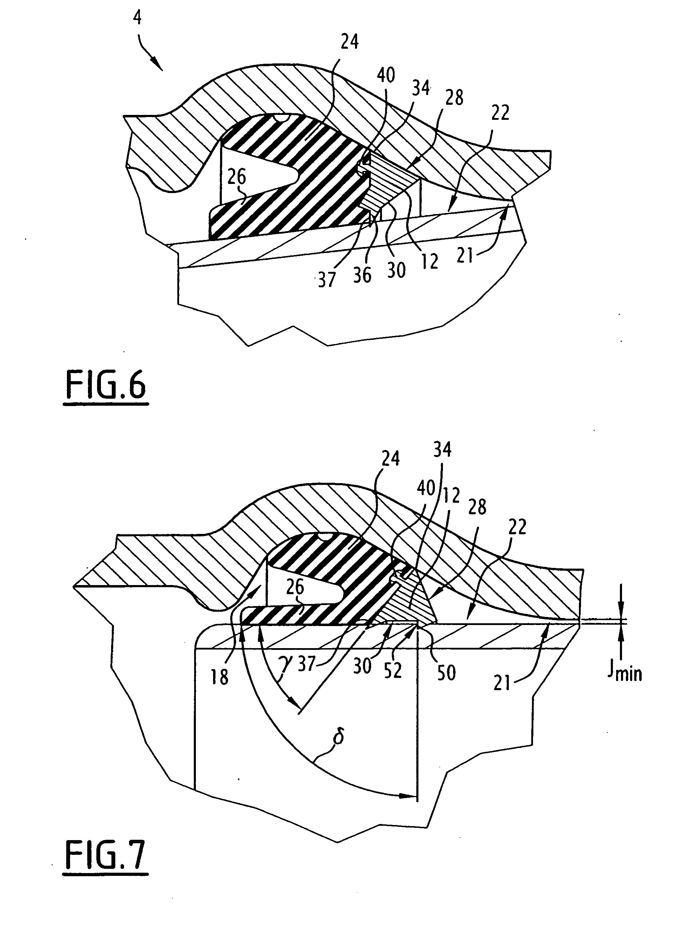

Sur la Figure 6 est représentée la jonction avec un décalage angulaire entre le bout uni 6 et le bout à emboîtement 4. On conçoit que le fait de prévoir une seule dent d'accrochage principale 36 permet de verrouiller de manière fiable le bout uni 6 et le bout à emboîtement 4 même en cas de décalages angulaires importants.

Sur la Figure 7 est représenté un deuxième mode de réalisation de la jonction tubulaire selon l'invention, qui diffère de la jonction par ce qui suit.

De manière avantageuse, la face radialement intérieure 30 de l'insert de verrouillage 12 est munie d'une dent d'accrochage 50 auxiliaire. Cette dent auxiliaire 50 est disposée à l'opposé de la dent d'accrochage principale 36, c'est-à-dire du côté de l'extrémité libre 16 du bout à emboîtement 4. Cette dent d'accrochage auxiliaire 50 est adaptée pour garantir le verrouillage lorsque le jeu J est faible, c'est à dire proche du jeu minimum Jₘᵢₙ, en s'opposant alors au glissement de la dent d'accrochage principale 36 sur la surface extérieure 22 du bout uni 6, ce risque de glissement étant potentiellement élevé à jeu faible compte-tenu du faible angle d'inclinaison, par rapport à la surface extérieure 22, de la réaction d'appui au niveau de cette dent d'accrochage 36. La dent d'accrochage auxiliaire 50 comporte une surface d'accrochage auxiliaire 52 qui forme un angle auxiliaire δ avec la face intérieure 30 de l'élément de verrouillage. Cet angle auxiliaire δ est supérieur à l'angle γ.

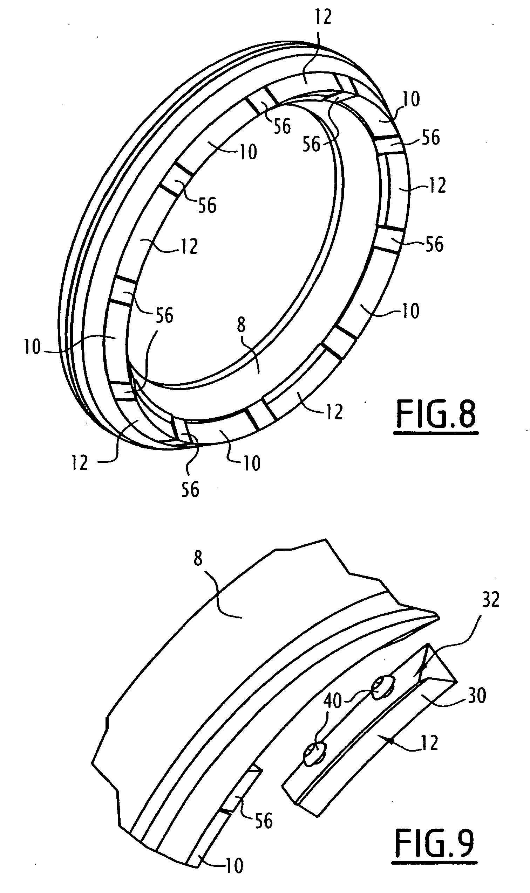

Selon un troisième mode de réalisation, décrit en référence aux Figures 8 et 9, les éléments anti-extrusion 10 sont insérés entre les éléments de verrouillage 12, régulièrement répartis sur tout le pourtour de la garniture 8. Les éléments anti-extrusion 10 sont séparés des éléments de verrouillage 12 par une entretoise circonférentielle 56 venue de matière avec la garniture d'étanchéité 8, cette entretoise 56 ayant une dimension circonférentielle réduite pour ne pas être extrudée sous l'effet de la pression intérieure. Ces entretoises améliorent la souplesse de la garniture d'étanchéité 8 et facilitent ainsi sa déformation en vue de son introduction dans le bout à emboîtement.

En ce qui concerne la fixation, les éléments de verrouillage 12 et les éléments anti-extrusion 10 sont équipés de tétons d'ancrage 40 solidaires de la face de liaison 32, ces tétons 40 étant surmoulés dans l'élastomère de la garniture 8. Avantageusement, les tétons d'ancrage 40 sont au préalable recouverts d'un agent d'adhésion permettant aux tétons 40 d'adhérer à l'élastomère après injection de celui-ci dans le moule. Ainsi, il n'est plus possible de démonter les éléments de verrouillage 12 et les éléments anti-extrusion 10 après moulage de la garniture 8. On notera cependant que les éléments de verrouillage 12 conservent avantageusement une certaine souplesse ou mobilité par rapport à la garniture d'étanchéité, dans la mesure où seuls les tétons d'ancrage 40 sont liés à l'élastomère. La face de liaison 32 est à cet effet disposée librement sur la garniture d'étanchéité 8.

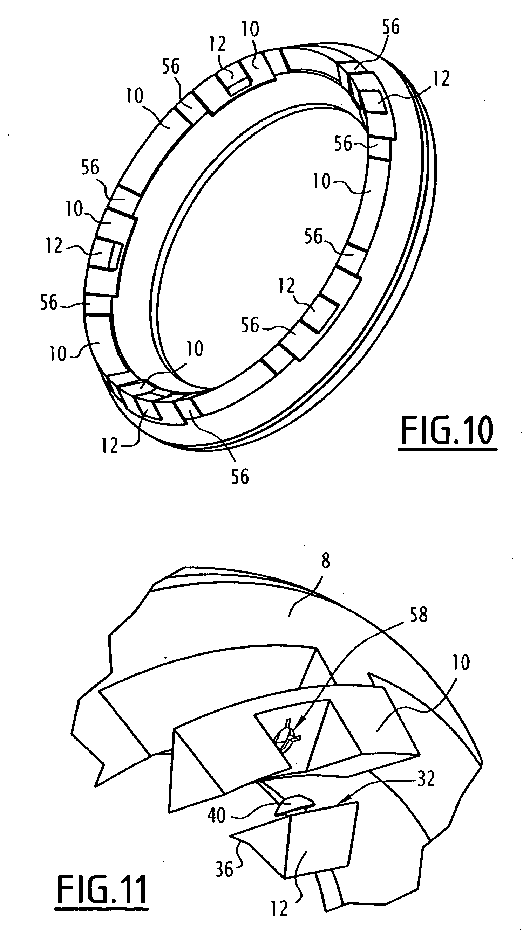

Dans le quatrième mode de réalisation, décrit en se référant aux Figures 10 et 11, la garniture d'étanchéité 8 porte deux séries d'éléments anti-extrusion ayant en vue axiale la forme générale de segments d'arc de cercle et présentant une face de liaison destinée à la liaison avec la garniture d'étanchéité 8. Les éléments 10 de la première série ont une section pleine et sont identiques à ceux précédemment décrits. Les éléments anti-extrusion 10 de la seconde série servent de support aux éléments de verrouillage 12. Chaque élément de verrouillage 12 présente à cet effet un téton d'encliquetage 40 pour l'encliquetage de l'élément de verrouillage 12 dans un évidement de réception 58 complémentaire ménagé dans l'élément anti-extrusion 10 de la deuxième série lui servant de support. Pour obtenir la garniture d'étanchéité selon le quatrième mode de réalisation, on clipse tout d'abord les éléments de verrouillage 12 sur les éléments anti-extrusion 10 associés, on enduit ensuite la face de liaison en matière plastique de l'ensemble des éléments anti-extrusion 10 d'un agent d'adhérisation, et on injecte enfin l'élastomère de la garniture 8 après avoir positionné ces éléments 10 dans un moule. De ce fait, malgré l'adhérisation des éléments anti-extrusion 10 à l'élastomère, les éléments de verrouillage 12 conservent eux une certaine souplesse ou flexibilité dans la mesure où ils sont simplement clipsés sur les éléments anti-extrusion 10 leur servant de support.

De plus, les éléments de verrouillage 12 étant rapportés sur les éléments anti-extrusion 10 de la deuxième série, il n'est pas nécessaire qu'ils épousent les profils du bout uni 6 et du bout à emboîtement, contrairement au modes de réalisation précédemment décrits où les éléments de verrouillage 12 sont incurvés en arc de cercle. Les éléments de verrouillage 12 ont donc ici des profils intérieurs et extérieurs rectilignes et notamment une dent d'accrochage principale 36 rectiligne. Ceci est avantageux car un même élément de verrouillage 12 peut alors être utilisé dans une plage de tolérances diamétrales sur les tuyaux qui est supérieure à la plage de tolérances diamétrales autorisée par l'élément de verrouillage 12 incurvé des Figures 1 à 9.

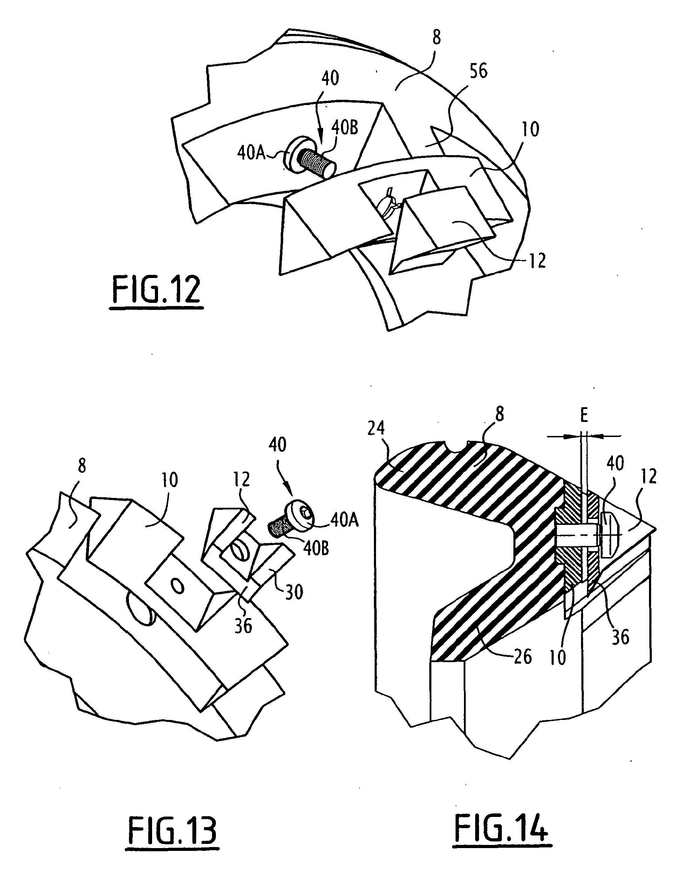

Le cinquième mode de réalisation (voir Figure 12) diffère de celui du quatrième mode de réalisation uniquement par le mode de fixation des éléments de verrouillage 12 sur les éléments anti-extrusion 10 leur servant de support, la fixation s'effectuant par l'intermédiaire de vis 40 au lieu des tétons d'ancrage. La tête 40A de la vis 40 est disposée du côté tourné vers la garniture d'étanchéité 8 et la partie filetée 40B de la vis 40 est vissée dans un taraudage de l'élément de verrouillage 12.

Le sixième mode de réalisation montré sur les Figures 13 et 14 est une variante de celui décrit en référence à la Figure 12, le vissage de l'élément de verrouillage 12 sur son support anti-extrusion 10 s'effectuant ici dans l'autre sens. La tête 40A de la vis 40 est logée dans un évidement ménagé dans l'élément de verrouillage 12 et la partie filetée 40B est vissée dans un taraudage de l'élément anti-extrusion 10. Il est à noter que la vis 40 de ce sixième mode de réalisation, après surmoulage des éléments anti-extrusion 10, n'est d'une part pas en contact avec l'élastomère, rendant ainsi l'élément de verrouillage 12 indépendant de l'élastomère et que d'autre part, après vissage, il subsiste un écart E entre l'élément de verrouillage 12 et l'élément anti-extrusion 10, garantissant ainsi à l'élément de verrouillage 12 une flexibilité totale qui facilite les mouvements nécessaires à l'élément de verrouillage 12 pour l'obtention du verrouillage.

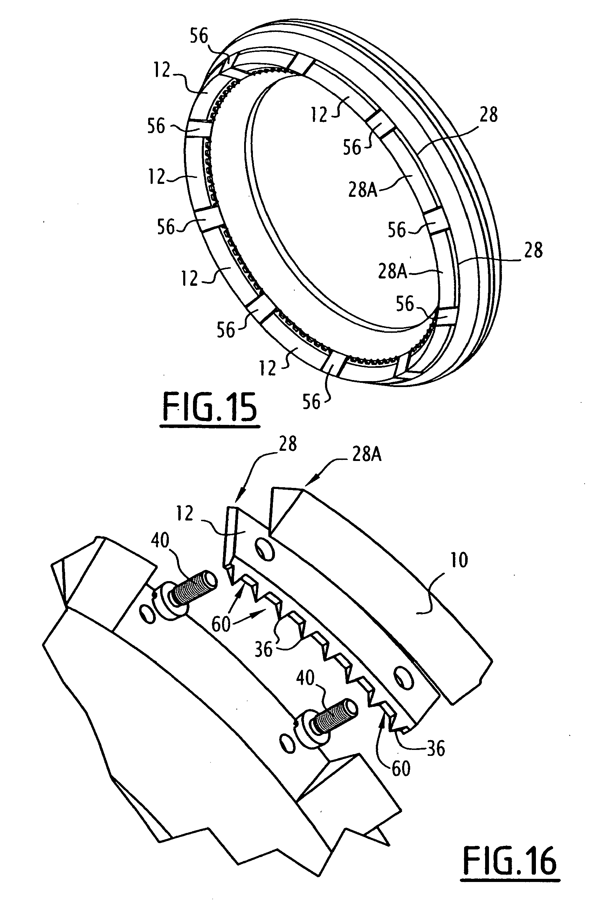

Sur les Figures 15 et 16 est représenté un septième mode de réalisation. La Figure 15 montre en perspective la garniture 8 portant des éléments anti-extrusion 10 et les éléments de verrouillage 12. La Figure 16 montre une partie de la garniture 8, les éléments 10 et 12 n'étant pas assemblés. La garniture d'étanchéité 8 est équipée d'éléments de verrouillage 12 ayant une forme générale en arc d'anneau plat. Les éléments de verrouillage 12 sont formés en métal traité, par exemple en acier trempé, et sont destinés à assurer le verrouillage de la jonction. Sur l'élément de verrouillage 12 est fixé un élément anti-extrusion 10 de section triangulaire, destiné à s'opposer à l'extrusion de l'élastomère. L'élément anti-extrusion 10 est en matière plastique rigide ou en métal non traité, par exemple en acier doux. Les deux éléments 10 et 12 sont reliés entre eux par l'intermédiaire de vis 40 dont la tête 40A est surmoulée dans l'élastomère de la garniture 8.

L'élément de verrouillage 12 constitue un segment en forme d'arc de cercle dont le bord radialement intérieur constitue une denture d'accrochage munie d'une pluralité de dents d'accrochage principales 36 décalées circonférentiellement et séparées les unes des autres par des gorges d'espacement 60. Dans ce cas, la surface radialement intérieure formée par chaque gorge d'espacement 60 entre les dents 36 permet de limiter la pénétration des dents 36 dans le bout uni 6 et remplace ainsi avantageusement la butée 38 décrite en référence au premier mode de réalisation.

En variante, la denture circonférentielle peut être remplacée par une dent 36 continue, comme pour les éléments de verrouillage 12 précédemment décrits.

L'élément de verrouillage 12 est pris en sandwich entre l'élément anti-extrusion 10 et la garniture 8. Les deux éléments 10 et 12 assemblés ont en section une forme générale triangulaire sensiblement identique à celle des éléments de verrouillage 12 précédents. Ainsi, la face d'application 28 de l'élément de verrouillage 12 est prolongée par une face d'application supplémentaire 28A solidaire de l'élément anti-extrusion 10.

On notera cependant que l'élément de verrouillage 12 présente ici une épaisseur axiale réduite, permettant ainsi de réduire significativement le coût des éléments de verrouillage 12 en comparaison du coût des éléments de verrouillage 12 décrits en référence aux Figures 1 à 9.

Enfin, si ce mode de réalisation des Figures 15 et 16 présente exclusivement des éléments de verrouillage 12 munis chacun d'un élément anti-extrusion et régulièrement répartis sur tout le pourtour de la garniture d'étanchéité 8, on peut également envisager, comme pour les modes de réalisation précédents, de placer entre deux éléments de verrouillage successifs de ce type, des éléments anti-extrusion 10 dépourvus de tout élément de verrouillage.

Il est à noter que les différentes caractéristiques décrites en liaison avec un mode de réalisation spécifique peuvent être appliquées d'une manière analogue aux autres modes de réalisation.

On notera enfin que le montage de la garniture d'étanchéité et de verrouillage composite selon l'invention dans la gorge intérieure 18 du bout à emboîtement 4, préalablement à l'insertion du bout uni 6, s'effectue à la main, en déformant simplement la garniture 8 en cardioïde de manière à pouvoir l'introduire aisément dans l'extrémité libre 16 rétrécie du bout à emboîtement 4.

## Revendications

1. Jonction tubulaire, du type comprenant
- un bout à emboîtement (4) d'un premier élément de canalisation, le bout à emboîtement (4) s'étendant selon un axe central (X-X), étant muni d'une gorge intérieure (18) et d'une extrémité libre (16) dans laquelle est inséré un bout uni (6) d'un deuxième élément de canalisation, la gorge intérieure (18) formant une paroi de gorge (20) de forme tronconique, qui forme un premier angle (α) avec l'axe central et qui est inclinée par rapport à l'axe central (X-X) en se rétrécissant vers l'extrémité libre (16) du bout à emboîtement (4),
- une garniture d'étanchéité (8) disposée dans la gorge intérieure (18),
- au moins un élément de verrouillage (12) adapté pour verrouiller le bout uni (6) par rapport au bout à emboîtement (4),
- le bout uni (6) et le bout à emboîtement (4) définissant un jeu radial (J) entre eux, ce jeu pouvant être situé soit dans une première gamme de jeux, soit dans une deuxième gamme de jeux, les jeux de la deuxième gamme de jeux étant inférieurs aux jeux de la première gamme de jeux,
**caractérisée en ce que** l'élément de verrouillage (12) comporte au moins une dent d'accrochage principale (36) adaptée pour venir mordre dans une surface extérieure (22) du bout uni (6) et une face d'application (28) qui, à l'état non sollicité de la garniture, est inclinée d'un deuxième angle (β) par rapport à l'axe central (X-X), ce deuxième angle (β) étant sensiblement identique au premier angle d'inclinaison, et qui est adaptée pour s'appliquer contre la paroi de gorge (20) et pour obtenir un verrouillage par effet de coin lors de la mise en pression et lorsque le jeu (J) est situé dans la première gamme de jeux, et
**en ce que**, lors de la mise en pression et lorsque le jeu est situé dans la deuxième gamme de jeux, l'élément de verrouillage (12) est adapté pour former un point de basculement (34) de cet élément (12) autour de la paroi de gorge (20), et la dent d'accrochage principale (36) est adaptée pour mordre dans la surface extérieure (22) par un arc-boutement de l'élément de verrouillage (12) entre le bout uni (6) et le bout à emboîtement (4).

2. Jonction tubulaire selon la revendication 1, **caractérisée en ce que**, lorsque le jeu (J) est dans la première gamme de jeux, la face d'application (28) est adaptée pour s'appliquer à plat et pour glisser sur la paroi de gorge (20) lors du recul du bout uni (6) par rapport au bout à emboîtement (4) dans le sens tendant à sortir le bout uni du bout à emboîtement (4), l'élément de verrouillage (12) se déplaçant axialement vers l'extrémité libre (16) et radialement vers l'intérieur par glissement de la face d'application (28) sur la paroi de gorge.

3. Jonction tubulaire selon la revendication 1 ou 2, **caractérisée en ce que**, lorsque la face d'application (28) de l'élément de verrouillage (12) s'applique contre la paroi de gorge (20), la dent d'accrochage principale (36) s'étend sensiblement radialement vers l'intérieur par rapport à l'axe central (X-X).

4. Jonction tubulaire selon l'une quelconque des revendications 1 à 3, **caractérisée en ce que** l'élément de verrouillage (12) comporte une face intérieure (30) qui, lorsque le jeu radial est un jeu minimal (Jₘᵢₙ), s'étend sensiblement parallèlement à l'axe central (X-X), le jeu minimal constituant une limite inférieure de la deuxième gamme de jeux.

5. Jonction tubulaire selon l'une quelconque des revendications 1 à 4, **caractérisée en ce que** l'élément de verrouillage (12) comporte une butée (38) adaptée pour limiter la pénétration de la dent d'accrochage principale (36) dans le bout uni (6).

6. Jonction tubulaire selon la revendication 5, **caractérisée en ce que** la butée (38) s'étend axialement à l'opposé de l'extrémité libre (16) du bout à emboîtement (4).

7. Jonction tubulaire selon l'une quelconque des revendications 1 à 6, **caractérisée en ce que** l'élément de verrouillage (12) comporte une dent d'accrochage auxiliaire (50), décalée axialement de la dent d'accrochage principale (36) dans le sens dirigé vers l'extrémité libre (16) du bout à emboîtement (4), et **en ce que** la dent d'accrochage auxiliaire (50) est adaptée pour accrocher la surface extérieure (22) du bout uni (6) lorsque le jeu (J) est proche du jeu minimal (Jₘᵢₙ).

8. Jonction tubulaire selon la revendication 7, **caractérisée en ce que** la dent d'accrochage auxiliaire (50) comporte une surface d'accrochage auxiliaire (52) qui est dirigée à l'opposé de l'extrémité libre (16) du bout à emboîtement (4) et qui formé un angle (δ) avec la face intérieure (30) de l'élément de verrouillage (12).

9. Jonction tubulaire selon l'une quelconque des revendications précédentes, **caractérisée en ce que** la dent d'accrochage principale (36) a une forme non rectiligne, notamment en arc de cercle.

10. Jonction tubulaire selon l'une quelconque des revendications 1 à 8, **caractérisée en ce que** la dent d'accrochage principale (36) a une forme rectiligne.

11. Jonction tubulaire selon l'une quelconque des revendications précédentes, **caractérisée en ce qu'**elle comporte au moins un élément anti-extrusion (10) qui est adapté pour empêcher l'extrusion de la garniture d'étanchéité (8) entre le bout uni (6) et le bout à emboîtement (4).

12. Jonction tubulaire selon la revendication 11, **caractérisée en ce que** l'élément anti-extrusion (10) est en matière plastique ayant une résistance à la déformation supérieure à celle de la matière de la garniture d'étanchéité (8), notamment en polyamide, en polyéthylène ou en polypropylène.

13. Jonction tubulaire selon la revendication 11 ou 12, **caractérisée en ce que** l'élément anti-extrusion (10) est fixé à la garniture d'étanchéité (8).

14. Jonction tubulaire selon l'une quelconque des revendications 11 à 13, **caractérisée en ce que** l'élément anti-extrusion (10) est disposé circonférentiellement entre deux éléments de verrouillage (12).

15. Jonction tubulaire selon l'une quelconque des revendications 11 à 13, **caractérisée en ce que** l'élément anti-extrusion (10) porte l'un des éléments de verrouillage. (12).

16. Jonction tubulaire selon la revendication 15, **caractérisée en ce que** l'élément de verrouillage (12) délimite un écart (E) avec l'élément anti-extrusion (10) lui servant de support, cet écart (E)conférant à l'élément de verrouillage une mobilité par rapport à la garniture d'étanchéité (8).

17. Jonction tubulaire selon l'une quelconque des revendications précédentes, **caractérisée en ce que** l'élément de verrouillage (12) est fabriqué en une matière ayant une dureté supérieure à celle de la matière du bout uni (6), notamment en métal.

18. Jonction tubulaire selon l'une quelconque des revendications précédentes, **caractérisée en ce qu'**elle comporte au moins une entretoise circonférentielle (56) en matière élastique, notamment venue de matière avec la garniture d'étanchéité, l'entretoise (56) étant disposée entre un élément de verrouillage (12) et un autre élément de verrouillage adjacent ou un élément anti-extrusion (10) adjacent.

19. Jonction tubulaire selon l'une quelconque des revendications précédentes, **caractérisée en ce que** l'élément de verrouillage (12) est fixé à la garniture d'étanchéité (8) ou à un élément anti-extrusion (10) au moyen d'au moins un organe de fixation (40), notamment une vis ou un téton d'ancrage.

20. Jonction tubulaire selon l'une quelconque des revendications précédentes, **caractérisée en ce que** l'élément de verrouillage (12) a une section sensiblement triangulaire.

21. Jonction tubulaire selon l'une quelconque des revendications précédentes, **caractérisée en ce que** l'élément de verrouillage (12) forme une face de liaison (32) adjacente à la garniture d'étanchéité (8).

22. Jonction tubulaire selon l'une quelconque des revendications précédentes, **caractérisée en ce que** le premier angle (α) est compris entre 10° et 55°.

## Claims

1. Tubular joint of the type comprising
- a bell end (4) of a first pipe element, the bell end (4) extending along a central axis (X-X), being equipped with an internal groove (18) and a free extremity (16) in which is inserted a spigot end (6) of a second pipe element, the internal grove (18) forming a truncated cone-shaped groove wall (20) which forms a first angle (α) with the central axis and is inclined to the central axis (X-X) while narrowing toward the free extremity (16) of the bell end (4),
- a seal (8) disposed in the internal groove (18),
- at least one locking element (12) adapted to lock the spigot end (6) relative to the bell end (4),
- the spigot end (6) and the bell end (4) defining a radial clearance (J) between themselves, this clearance being able to be situated either in a first range of clearances or in a second range of clearances, the clearances of the second range of clearances being smaller than the clearances of the first range of clearances,
**characterised in that** the locking element (12) comprises at least one main fixing tooth (36) adapted to bite into an external surface (22) of the spigot end (6) and a contact face (28) which, when the seal is unstressed, is inclined at a second angle (β) relative to the central axis (X-X), this second angle (β) being substantially identical to the first angle of inclination, and which is adapted to be applied to the groove wall (20) and to achieve locking by a wedge effect during pressurisation and when the clearance (J) lies in the first range of clearances, and
**in that**, during pressurisation and when the clearance lies in the second range of clearances, the locking element (12) is adapted to form a rocking point (34) of this element (12) around the groove wall (20), and the main fixing tooth (36) is adapted to bite into the external surface (22) by the arch-buttress effect of the locking element (12) between the spigot end (6) and the bell end (4).

2. Tubular joint according to claim 1, **characterised in that**, when the clearance (J) is in the first range of clearances, the contact face (28) is adapted to be applied in a planar manner and to slide on the groove wall (20) when the spigot end (6) is retracted from the bell end (4) in the direction tending to remove the spigot end from the bell end (4), the locking element (12) moving axially toward the free extremity (16) and radially toward the interior by sliding of the contact face (28) on the groove wall.

3. Tubular joint according to either claim 1 or claim 2, **characterised in that**, when the contact face (28) of the locking element (12) is applied to the groove wall (20), the main fixing tooth (36) extends substantially radially toward the interior relative to the central axis (X-X).

4. Tubular joint according to any one of claims 1 to 3, **characterised in that** the locking element (12) comprises an internal face (30) which, when the radial clearance is a minimal clearance (Jₘᵢₙ), extends substantially parallel to the central axis (X-X), the minimal clearance constituting a lower limit of the second range of clearances.

5. Tubular joint according to any one of claims 1 to 4, **characterised in that** the locking element (12) comprises a stop (38) adapted to limit the penetration of the main fixing tooth (36) in the spigot end (6).

6. Tubular joint according to claim 5, **characterised in that** the stop (38) extends axially away from the free extremity (16) of the bell end (4).

7. Tubular joint according to any one of claims 1 to 6, **characterised in that** the locking element (12) comprises an auxiliary fixing tooth (50) which is axially offset from the main fixing tooth (36) in the direction toward the free extremity (16) of the bell end (4) and **in that** the auxiliary fixing tooth (50) is adapted to fix on to the external surface (22) of the spigot end (6) when the clearance (J) is close to the minimal clearance (Jₘᵢₙ).

8. Tubular joint according to claim 7, **characterised in that** the auxiliary fixing tooth (50) comprises an auxiliary fixing surface (52) which is directed away from the free extremity (16) of the bell end (4) and which forms an angle (δ) with the internal face (30) of the locking element (12).

9. Tubular joint according to any one of the preceding claims, **characterised in that** the main fixing tooth (36) has a non-rectilinear shape, in particular is shaped as an arc of a circle.

10. Tubular joint according to any one of claims 1 to 8, **characterised in that** the main fixing tooth (36) has a rectilinear shape.

11. Tubular joint according to any one of the preceding claims, **characterised in that** it comprises at least one anti-extrusion element (10) which is adapted to prevent the extrusion of the seal (8) between the spigot end (6) and the bell end (4).

12. Tubular joint according to claim 11, **characterised in that** the anti-extrusion element (10) is made of plastics material having a resistance to deformation which is greater than that of the material of the seal (8), in particular of polyamide, polyethylene or polypropylene.

13. Tubular joint according to either claim 11 or claim 12 **characterised in that** the anti-extrusion element (10) is fixed to the seal (8).

14. Tubular joint according to any one of claims 11 to 13, **characterised in that** the anti-extrusion element (10) is disposed circumferentially between two locking elements (12).

15. Tubular joint according to any one of claims 11 to 13, **characterised in that** the anti-extrusion element (10) carries one of the locking elements (12).

16. Tubular joint according to claim 15, **characterised in that** the locking element (12) delimits a gap (E) from the anti-extrusion element (10) supporting it, this gap (E) imparting mobility to the locking element relative to the seal (8).

17. Tubular joint according to any one of the preceding claims, **characterised in that** the locking element (12) is produced from a material of which the hardness is greater than that of the material of the spigot end (6), in particular from metal.

18. Tubular joint according to any one of the preceding claims, **characterised in that** it comprises at least one circumferential spacer (56) which is made of resilient material, in particular is integral with the seal, the spacer (56) being disposed between a locking element (12) and another adjacent locking element or an adjacent anti-extrusion element (10).

19. Tubular joint according to any one of the preceding claims, **characterised in that** the locking element (12) is fixed to the seal (8) or to an anti-extrusion element (10) by means of at least one fastening member (40), in particular a screw or an anchor stud.

20. Tubular joint according to any one of the preceding claims, **characterised in that** the locking element (12) has a substantially triangular cross-section.

21. Tubular joint according to any one of the preceding claims, **characterised in that** the locking element (12) forms a connecting face (32) adjacent to the seal (8).

22. Tubular joint according to any one of the preceding claims, **characterised in that** the first angle (α) is between 10° and 55°.

## Patentansprüche

1. Rohrverbindung, die folgendes umfasst.
- ein Aufsteckende (4) eines ersten Kanalisationselements, wobei sich das Aufsteckende (4) entlang einer zentralen Achse (X-X) erstreckt, das mit einem inneren Schlund (18) und einem freien Ende (16) versehen ist, in das ein glattes Ende (6) eines zweiten Kanalisationselements eingesteckt ist, wobei der innere Schlund (18) eine kegelstumpfförmige Schlundwand (20) bildet, die einen ersten Winkel (α) mit der zentralen Achse bildet und die unter Verjüngung in Richtung des freien Endes (16) des Aufsteckendes (4) bezüglich der zentralen Achse (X-X) geneigt ist,
- einen im Innenschlund (18) angeordneten Dichtungsbelag (8),
- mindestens ein Verschlusselement (12), das zum Verriegeln des glatten Endes (6) bezüglich des Aufsteckendes (4) ausgelegt ist,
- wobei das glatte Ende (6) und das Aufsteckende (4) zwischen sich ein radiales Spiel (J) definieren, wobei dieses Spiel entweder in einem ersten Bereich von Spiel oder in einem zweiten Bereich von Spiel liegen kann, wobei die Spiele des zweiten Bereichs von Spiel kleiner sind als die Spiele des ersten Bereichs von Spiel,
- **dadurch gekennzeichnet, dass** das Verschlusselement (12) mindestens einen Haupteingriffszahn (36), der dazu geeignet ist, in eine äußere Fläche (22) des glatten Endes (6) einzugreifen, und eine Anliegefläche (28), die im nicht beanspruchten Zustand des Belags um einen zweiten Winkel (β) bezüglich der zentralen Achse (X-X) geneigt ist, umfasst, wobei dieser zweite Winkel (β) in Wesentlichen mit dem ersten Neigungswinkel identisch ist, und der dazu ausgelegt ist, an der Schlundwand (20) anzuliegen und eine Verriegelung durch einen Kanteneffekt zu erhalten, wenn Druck ausgeübt wird und wenn das Spiel (J) in dem erstem Bereich von Spiel liegt, und
- dadurch, dass bei der Druckausübung und wenn das Spiel in einem zweiten Bereich von Spiel liegt, das Verschlusselement (12) dazu ausgelegt ist, einen Umklapppunkt (34) von diesem Element (12) um die Schlundwand (20) zu bilden, und der Haupteingriffszahn (36) dazu ausgelegt ist, durch eine Stützstrebe des Verschlusselements (12) zwischen dem glatten Ende (6) und dem Aufsteckende (4) in die äußere Fläche (22) einzugreifen.

2. Rohrverbindung nach Anspruch 1, **dadurch gekennzeichnet, dass** wenn das Spiel (J) sich im ersten Bereich von Spiel befindet, die Anliegefläche (28) dazu ausgelegt ist, flach anzuliegen und bei Rückzug des glatten Endes (6) bezüglich des Aufsteckendes (4) in der Richtung zu gleiten, die darauf abzielt, das glatte Ende (6) bezüglich des Aufsteckendes (4) zu entnehmen, wobei sich das Verschlusselement (12) axial zum freien Ende (16) und radial zum Inneren durch Gleiten der Anliegefläche (28) an der Schlundwand verschiebt.

3. Rohrverbindung nach Anspruch 1 oder 2, **dadurch gekennzeichnet, dass** wenn die Anliegefläche (28) des Verschlusselements (12) an der Schlundwand (20) anliegt, der Haupteingriffszahn (36) bezüglich der zentralen Achse (X-X) im Wesentlichen radial nach Innen verläuft.

4. Rohrverbindung nach einem der Ansprüche 1 bis 3, **dadurch gekennzeichnet, dass** das Verschlusselement (12) eine innere Fläche (30) umfasst, die sich, wenn das radiale Spiel ein minimales Spiel (Jₘᵢₙ) ist, im Wesentlichen parallel zur zentralen Achse (X-X) erstreckt, wobei das minimale Spiel eine untere Grenze des zweiten Bereichs von Spiel darstellt.

5. Rohrverbindung nach einem der Ansprüche 1 bis 4, **dadurch gekennzeichnet, dass** das Verschlusselement (12) einen Anschlag (38) umfasst, der dazu ausgelegt ist, das Eindringen des Haupteingriffszahns (36) in das glatte Ende (36) zu begrenzen.

6. Rohrverbindung nach Anspruch 5, **dadurch gekennzeichnet, dass** sich der Anschlag (38) axial auf der entgegengesetzten Seite zum freien Ende (26) des Aufsteckendes (4) erstreckt.

7. Rohrverbindung nach einem der Ansprüche 1 bis 6, **dadurch gekennzeichnet, dass** das Verschlusselement (12) einen Hilfseingriffszahn (50) umfasst, der vom Haupteingriffszahn (36) in der Richtung zum freien Ende (16) des Aufsteckendes (4) hin axial versetzt ist, und dadurch, dass der Hilfseingriffszahn (50) dazu ausgelegt ist, in die äußere Fläche (22) des glatten Endes (6) einzugreifen, wenn sich das Spiel (J) in der Nähe des minimalen Spiel (Jₘᵢₙ) befindet.

8. Rohrverbindung nach Anspruch 7, **dadurch gekennzeichnet, dass** der Hilfseingriffszahn (50) eine Hilfseingriffsfläche (52) umfasst, die auf die entgegengesetzte Seite des freien Endes (16) des Aufsteckendes (4) ausgerichtet ist und die einen Winkel (δ) mit der inneren Fläche (30) des Verschlusselements (12) bildet.

9. Rohrverbindung nach einem der vorhergehenden Ansprüche, **dadurch gekennzeichnet, dass** der Haupteingriffszahn (36) eine nicht geradlinige Form, insbesondere eines Kreisbogens, aufweist.

10. Rohrverbindung nach einem der Ansprüche 1 bis 8, **dadurch gekennzeichnet, dass** der Haupteingriffszahn (36) eine geradlinige Form aufweist.

11. Rohrverbindung nach einem der vorhergehenden Ansprüche, **dadurch gekennzeichnet, dass** sie mindestens ein extrusionshemmendes Element (10) umfasst, das dazu ausgelegt ist, die Extrusion des Dichtungsbelags (8) zwischen dem glatten Ende (6) und dem Aufsteckende (4) zu verhindern.

12. Rohrverbindung nach Anspruch 11, **dadurch gekennzeichnet, dass** das extrusionshemmende Element (10) aus Kunststoff ist, mit einer Formbeständigkeit, die größer ist als diejenige des Materials des Dichtungsbelags (8), insbesondere aus Polyamid, Polyethylen, oder aus Polypropylen ist.

13. Rohrverbindung nach Anspruch 11 oder Anspruch 12, **dadurch gekennzeichnet, dass** das extrusionshemmende Element (10) an dem Dichtungsbelag (8) befestigt ist.

14. Rohrverbindung nach einem der Ansprüche 11 bis 13, **dadurch gekennzeichnet, dass** das extrusionshemmende Element (10) auf dem Umfang zwischen zwei Verschlusselementen (12) angeordnet ist.

15. Rohrverbindung nach einem der Ansprüche 11 bis 13, **dadurch gekennzeichnet, dass** das extrusionshemmende Element (10) eines der Verschlusselemente (12) trägt.

16. Rohrverbindung nach Anspruch 15, **dadurch gekennzeichnet, dass** das Verschlusselement (12) einen Abstand (E) mit dem extrusionshemmenden Element (10), das ihm als Träger dient, begrenzt, wobei dieser Abstand (E) dem Verschlusselement eine Beweglichkeit bezüglich des Dichtungsbelags (8) verleiht.

17. Rohrverbindung nach einem der vorhergehenden Ansprüche, **dadurch gekennzeichnet, dass** das Verschlusselement (12) aus einem Material mit einer Festigkeit, die größer ist als diejenige des Materials des glatten Endes (6), insbesondere aus Metall, gefertigt ist.

18. Rohrverbindung nach einem der vorhergehenden Ansprüche, **dadurch gekennzeichnet, dass** sie mindestens einen zirkumferentiellen Abstandshalter (56) aus elastischem Material umfasst, insbesondere aus dem gleichen Material wie der Dichtungsbelag, wobei der Abstandshalter (56) zwischen einem Verschlusselement (12) und einen anderen gegenüberliegenden Verschlusselement oder einem gegenüberliegenden extrusionshemmenden Element (10) angeordnet ist.

19. Rohrverbindung nach einem der vorhergehenden Ansprüche, **dadurch gekennzeichnet, dass** das Verschlusselement (12) an dem Dichtungsbelag (8) oder an einem extrusionshemmenden Element (10) mittels mindestens einem Befestigungsorgan (40), insbesondere einer Schraube oder einem Verankerungsnippel, befestigt ist.

20. Rohrverbindung nach einem der vorhergehenden Ansprüche, **dadurch gekennzeichnet, dass** das Verschlusselement (12) einen im Wesentlichen dreieckigen Querschnitt aufweist.

21. Rohrverbindung nach einem der vorhergehenden Ansprüche, **dadurch gekennzeichnet, dass** das Verschlusselement (12) eine Verbindungsfläche (32) gegenüber dem Dichtungsbelags (8) bildet.

22. Rohrverbindung nach einem der vorhergehenden Ansprüche, **dadurch gekennzeichnet, dass** der erste Winkel (α) 10° bis 55° beträgt.
